# EUROPÄISCHE PATENTSCHRIFT

(11) **EP 3 293 417 B1**
(45) Veröffentlichungstag und Bekanntmachung des Hinweises auf die Patenterteilung: **29.04.2020**
(21) Anmeldenummer: 17185301.3
(22) Anmeldetag: 08.08.2017
(51) Int. Cl.: F16H 35/10, F16D 7/02

(54) **DREHANTRIEBSEINRICHTUNG MIT LASTABHÄNGIGER BREMSE**
ROTARY DRIVE DEVICE COMPRISING LOAD-DEPENDENT BRAKES
DISPOSITIF D'ENTRAÎNEMENT EN ROTATION POURVU DE FREIN ASSERVI À LA CHARGE

(30) Priorität: 09.08.2016 DE 102016214774
(43) Veröffentlichungstag der Anmeldung: 14.03.2018
(73) Patentinhaber: Stabilus GmbH, 56070 Koblenz (DE)
(72) Erfinder: Ritter, Andreas, 56206 Hilgert (DE); Arenz, Bernd, 53518 Herschbroich (DE); Hillen, Jörg, 56283 Nörtershausen (DE); Batosky, Oleg, 56154 Boppard (DE)
(74) Vertreter: Weickmann & Weickmann PartmbB

(56) Entgegenhaltungen:
- EP-A2- 2 789 869
- KR-A- 20020 035 553
- US-A- 2 763 141
- US-A1- 2010 186 528

## Beschreibung

Die vorliegende Erfindung betrifft eine Drehantriebseinrichtung, umfassend ein Gehäuseelement, eine in dem Gehäuseelement drehbar gelagerte Antriebswelle, eine in dem Gehäuseelement drehbar gelagerte Abtriebswelle, sowie eine Übertragungseinrichtung zur Übertragung eines Drehmoments von der Antriebswelle auf die Abtriebswelle.

Derartige Drehantriebseinrichtungen sind allgemein bekannt. Sie können einerseits zur Bereitstellung einer Rotationsbewegung an der Abtriebswelle eingesetzt werden, die dann weitere Komponenten einer übergeordneten Konstruktion antreibt, oder beispielsweise auch in Zusammenwirkung mit einer Einrichtung zum Übersetzen der Drehbewegung der Abtriebswelle in eine Längsbewegung, wie beispielsweise einem Schneckengetriebe oder Ähnlichem. Derartige längenveränderbare Aggregate, in denen eine Rotationsbewegung einer Antriebswelle über eine Abtriebswelle und weiterhin eine Einrichtung zum Übersetzen der Drehbewegung in eine Längsbewegung zur Längenveränderung des Gesamtaggregats umgesetzt wird, werden insbesondere in Kraftfahrzeugen beispielsweise zum Schließen und Öffnen von Motorhauben, Heckklappen, Kofferraumdeckeln, Türen und dergleichen schwenkbaren Elementen eingesetzt.

In den bekannten gattungsgemäßen Vorrichtungen ist allerdings kein Mechanismus vorgesehen, der abhängig von einer Drehmomentdifferenz zwischen der Antriebswelle und der Abtriebswelle eine Bremskraft gegen die Rotationsbewegung der Antriebswelle oder Abtriebswelle in der Drehantriebseinrichtung bereitstellt. Es hat sich jedoch gezeigt, dass insbesondere Bedarf besteht nach einer Drehantriebseinrichtung, in der abhängig von der genannten Drehmomentdifferenz zwischen der Antriebswelle und der Abtriebswelle mit steigender Drehmomentdifferenz eine sich verkleinernde Bremskraft bereitgestellt wird, so dass der Drehantrieb bei einer geringen "Spannung" zwischen der Antriebswelle und der Abtriebswelle, d.h. beispielsweise zwischen dem der Antriebswelle zugeordneten Motor und der der Abtriebswelle zugeordneten anzutreibenden Komponente, stark gebremst wird, während bei einer großen "Spannung" zwischen den genannten Komponenten die Bremswirkung verringert oder gar ganz aufgehoben wird.

Es sei hierbei insbesondere auf die US 2010/186528 A1 verwiesen, die eine Drehantriebseinrichtung mit den Merkmalen des Oberbegriffs des Anspruchs 1 zeigt.

Es ist daher die Aufgabe der vorliegenden Erfindung, eine Drehantriebseinrichtung mit einer derartigen Bremscharakteristik bereitzustellen, die strukturell einfach und zuverlässig aufgebaut ist und kostengünstig hergestellt werden kann, indem bekannte Motor- und Getriebebaugruppen ohne Modifikation verwendet werden können.

Diese Aufgabe wird durch eine Drehantriebseinrichtung der oben genannten Art gelöst, in der die Übertragungseinrichtung eine Bremsvorrichtung umfasst, welche dazu eingerichtet ist, einer Drehung der Antriebswelle eine Bremskraft entgegenzuwirken, wobei die Bremsvorrichtung ein der Antriebswelle zugeordnetes und durch diese drehend antreibbares Eingangselement, ein drehfest mit dem Gehäuseelement verbundenes Bremselement und ein bezüglich dem Eingangselement zwischen einer ersten Stellung und einer zweiten Stellung verstellbares Kupplungselement umfasst, wobei die durch die Bremsvorrichtung ausgeübte Bremskraft größer ist, wenn sich das Kupplungselement in der ersten Stellung befindet als wenn es sich in der zweiten Stellung befindet, wobei ferner das Kupplungselement der Abtriebswelle derart zugeordnet ist, dass seine Verstellung von der ersten Stellung zu der zweiten Stellung durch ein Überschreiten eines ersten Schwellenwerts der Drehmomentdifferenz zwischen der Antriebswelle und der Abtriebswelle ausgelöst wird.

Durch das Bereitstellen der Übertragungseinrichtung mit der soeben beschriebenen, einfach aufgebauten Bremsvorrichtung kann die oben genannte gewünschte Bremscharakteristik der Drehantriebseinrichtung konstruktiv einfach mit nur wenigen Bauteilen erreicht werden, da weder die Motorbaugruppe noch die Getriebebaugruppe der Drehantriebseinrichtung gegenüber bekannten gattungsgemäßen Drehantriebseinrichtungen modifiziert werden muss.

Hierbei wirkt in der Drehantriebseinrichtung eine konstante erste Bremskraft, solange der erste Schwellenwert der Drehmomentdifferenz zwischen der Antriebswelle und der Abtriebswelle unterschritten bleibt, das heißt unter anderem auch wenn sich die Antriebswelle in Ruhe befindet, und bei Überschreitung des ersten Schwellenwerts wird eine Verstellung des Kupplungselements von der ersten Stellung zu der zweiten Stellung ausgelöst. Hierbei ist festzuhalten, dass der erste Schwellenwert durchaus auch Null betragen kann, dies ist insbesondere in der weiter unten beschriebenen Ausführungsform von Bedeutung, in der ein kontinuierlicher Bereich von abnehmender Bremskraft vorgesehen ist, wobei in diesem Fall bereits bei einer minimalen Drehmomentdifferenz das Überstreichen des kontinuierlichen Bereichs beginnen kann.

Erfindungsgemäß kann eine Mehrzahl von zweiten Stellungen für das Kupplungselement vorgesehen sein, in welchen jeweils durch die Bremsvorrichtung eine vorbestimmte Bremskraft ausgeübt wird, wobei ferner das Kupplungselement dazu eingerichtet sein kann, bei zunehmender Drehmomentdifferenz zwischen der Antriebswelle und der Abtriebswelle in zweite Stellungen mit abnehmender Bremskraft überzugehen. Hierzu ist zusätzlich zu der ersten Stellung auch jeder der zweiten Stellungen (bis auf diejenige mit der geringsten Bremskraft) ein entsprechender erster Schwellenwert zugeordnet, bei dessen Überschreitung das Kupplungselement jeweils in die zweite Stellung mit dem nächst niedrigeren Bremskraftwert übergeht. Auf diese Weise wird eine stufenartige Bremscharakteristik der Drehantriebseinrichtung erreicht, wobei die Bremskraft bei einem Ansteigen der Drehmomentdifferenz zwischen der Antriebswelle und der Abtriebswelle sukzessive zu kleineren Werten übergeht. Hierbei können die jeweiligen Abstufungen in der Bremskraft zwischen den einzelnen zweiten Stellungen frei gewählt werden, beispielsweise einem linearen Verlauf folgend oder auch progressiv oder degressiv abnehmend.

Zusätzlich oder alternativ kann die Mehrzahl von zweiten Stellungen wenigstens teilweise durch einen kontinuierlichen Bereich mit einem Bremskraftgradienten gebildet sein, wobei das Kupplungselement dazu eingerichtet ist, bei zunehmender Drehmomentdifferenz zwischen der Antriebswelle und der Abtriebswelle den kontinuierlichen Bereich in Richtung abnehmender Bremskraft zu durchlaufen. In dieser Weiterbildung wird durch das Bereitstellen eines stetigen Absinkens der Bremskraft mit zunehmender Drehmomentdifferenz zwischen der Antriebswelle und der Abtriebswelle eine glatte Bremscharakteristik erzeugt und damit eine mögliche ruckartige Rotationscharakteristik der Abtriebswelle von vornherein ausgeschlossen.

Somit zeichnet sich eine derartige Drehantriebseinrichtung durch einen besonders ruhigen Betrieb und eine besonders feinfühlige Ansprache aus.

Eine beispielhafte Ausführungsform eines kontinuierlichen Bereichs abnehmender Bremskraft kann beispielsweise derart gebildet sein, dass bei zunehmender Drehmomentdifferenz ein Anpressdruck zwischen dem Bremselement und dem Kupplungselement kontinuierlich verringert wird, wobei diese beiden Elemente zunächst nur minimal gegeneinander verlagert werden und daher aufgrund elastischer Verformung in Kontakt bleiben. In dieser Ausführungsform kann zusätzlich vorgesehen sein, dass oberhalb eines bestimmten Werts der Drehmomentdifferenz das Bremselement und das Kupplungselement nicht mehr in Kontakt stehen, wodurch die Bremsvorrichtung dann freigegeben ist und die Bremskraft auf im Wesentlichen Null abnimmt. Hierbei entsprechen sowohl der kontinuierliche Bereich abnehmender Bremskraft als auch die Konfiguration, in der das Bremselement und das Kupplungselement nicht mehr in Kontakt sind, jeweils zweiten Stellungen.

In einer Weiterbildung der erfindungsgemäßen Drehantriebseinrichtung kann das Kupplungselement der Abtriebswelle ferner derart zugeordnet sein, dass seine Verstellung von der zweiten Stellung zu der ersten Stellung durch ein Unterschreiten eines zweiten Schwellenwerts der Drehmomentdifferenz zwischen der Antriebswelle und der Abtriebswelle ausgelöst wird.

Auf diese Weise wird nach Einnehmen der zweiten Stellung durch das Kupplungselement so lange eine konstante zweite Bremskraft eingewirkt, die betragsmäßig kleiner ist als die oben genannte erste Bremskraft in der ersten Stellung des Kupplungselements, bis die Drehmomentdifferenz zwischen der Antriebswelle und der Abtriebswelle unter den genannten zweiten Schwellenwert abgefallen ist. Auf diese Weise wird verhindert, dass wenn sich die Drehmomentdifferenz in einem kleinen Bereich um den ersten Schwellenwert herum ändert, das Kupplungselement wiederholt von der ersten Stellung in die zweite Stellung und zurück in die erste Stellung übergeht, was zu einer unstetigen bzw. ruckeligen Bremscharakteristik der Drehantriebseinrichtung und somit zu vermehrten Kraftstößen in der Bewegungscharakteristik der Abtriebswelle führen könnte.

Außerdem kann gegebenenfalls in ähnlicher Weise jeder der Mehrzahl von zweiten Stellungen ebenfalls ein zweiter Schwellenwert zugeordnet sein, so dass beim Erreichen einer bestimmten zweiten Stellung mit einer vorbestimmten Bremskraft der Übergang zurück zu der benachbarten Stellung mit größerer Bremskraft erst beim Unterschreiten dieses zweiten Schwellenwerts geschieht, wodurch der oben genannte Vorteil des Verhinderns einer unstetigen Bremscharakteristik durch häufiges Springen zwischen benachbarten Stellungen in jeder der Mehrzahl von zweiten Stellungen sichergestellt werden kann.

In einer Ausführungsform kann die Übertragungseinrichtung ferner ein mit der Antriebswelle drehfest sowie ortsfest verbundenes Antriebs-Übertragungselement sowie ein mit der Abtriebswelle drehfest verbundenes und entlang der Abtriebswelle verlagerbares Abtriebs-Übertragungselement umfassen, wobei das Kupplungselement drehfest sowie ortsfest mit dem Abtriebs-Übertragungselement verbunden ist. Diese Ausgestaltung stellt eine besonders einfache Möglichkeit dar, das Kupplungselement zwischen verschiedenen Stellungen durch Verlagerung des Abtriebs-Übertragungselements zwischen verschiedenen Positionen zu verlagern und somit die gewünschte Bremskraftcharakteristik der Drehantriebseinrichtung zu erreichen.

In einer Weiterbildung können hierbei das Antriebs-Übertragungselement und das Abtriebs-Übertragungselement mit wenigstens einem Paar zusammenwirkender Schrägflächen bereitgestellt sein, die dazu eingerichtet sind, eine relative Rotation der beiden Übertragungselemente in eine Verlagerung des Abtriebs-Übertragungselements entlang der Abtriebswelle umzusetzen. Auf diese Weise kann durch das Abgleiten der Schrägflächen gegeneinander, das durch die Drehmomentdifferenz zwischen der Antriebswelle und der Abtriebswelle ausgelöst wird, die Verlagerung des Abtriebs-Übertragungselements entlang der Abtriebswelle und somit des Kupplungselements gegenüber dem Bremselement erreicht werden.

Hierbei kann die relative Rotation der beiden Übertragungselemente auf einen vorbestimmten maximalen Winkel beschränkt sein, beispielsweise mittels wenigstens einem den beiden Übertragungselementen zugeordneten Paar von zusammenwirkenden Anschlägen. Auf diese Weise kann einerseits eine Endstellung für die Verlagerung des Kupplungselements gegenüber dem Bremselement bereitgestellt werden und andererseits ein Schlupf zwischen dem Antriebs-Übertragungselement und dem Abtriebs-Übertragungselement und somit der Antriebswelle und der Abtriebswelle verhindert werden.

Um sicherzustellen, dass sich in einem Ruhezustand das Abtriebs-Übertragungselement und das Antriebs-Übertragungselement in einer vordefinierten Positionsbeziehung zueinander befinden und auch wieder in diese Positionsbeziehung übergehen, wenn der Betrieb der Drehantriebseinrichtung angehalten wird, und um andererseits auch die maximal wirkende Bremskraft festzulegen, kann ein elastisches Element, wie beispielsweise eine Spiralfeder, vorgesehen sein, welche das Abtriebs-Übertragungselement in Richtung des Antriebs-Übertragungselements vorbelastet.

Hierzu kann insbesondere das elastische Element einerseits an einem der Antriebswelle zugeordneten Stützelement und andererseits an einem der Abtriebswelle zugeordneten Element, insbesondere dem Kupplungselement, abgestützt sein. Weiter insbesondere kann das Eingangselement der Bremsvorrichtung an dem der Antriebswelle zugeordneten Stützelement getragen sein. Durch diese Konstruktion wird mit einer minimalen Anzahl von benötigten Bauteilen eine Übertragungseinrichtung mit einer Bremsvorrichtung für eine erfindungsgemäße Drehantriebseinrichtung bereitgestellt.

Ferner kann in einer Weiterbildung der erfindungsgemäßen Drehantriebseinrichtung ein die Antriebswelle antreibender Motor und gegebenenfalls ein Getriebe, insbesondere ein Planetengetriebe, ebenfalls innerhalb des Gehäuseelements angeordnet sein. Hierbei kann das Getriebe sowohl der Antriebswelle als auch der Abtriebswelle zugeordnet sein, wobei die erfindungsgemäße Bremsvorrichtung insbesondere vorteilhaft mit einem der Abtriebswelle zugeordneten Getriebe kombiniert werden kann.

Zuletzt betrifft die vorliegende Erfindung eine längenveränderbare Anordnung, umfassend eine erfindungsgemäße Drehantriebseinrichtung sowie eine Einrichtung zum Übersetzen einer Drehbewegung der Abtriebswelle in eine Längsbewegung.

Weitere Merkmale und Vorteile der vorliegenden Erfindung werden aus der nachfolgenden Beschreibung deutlich, wenn diese in Zusammenschau mit den beiliegenden Figuren betrachtet wird.

Diese zeigen im Einzelnen:
- Figur 1: einen Längsschnitt durch eine Ausführungsform erfindungsgemäßen Drehantriebseinrichtung; einer
- Figuren 2a und 2b: vergrößerte Ansichten der Ausführungsform aus Figur 1 im Bereich der Übertragungseinrichtung in einer ersten Stellung bzw. einer zweiten Stellung;
- Figuren 3a und 3b: vergrößerte Ansichten des Antriebs-Übertragungselements bzw. des Abtriebs-Übertragungselements der Ausführungsform aus den Figuren 1, 2a und 2b; und
- Figur 4: einen Querschnitt durch die Darstellung aus Figur 1 im Bereich der Übertragungseinrichtung.

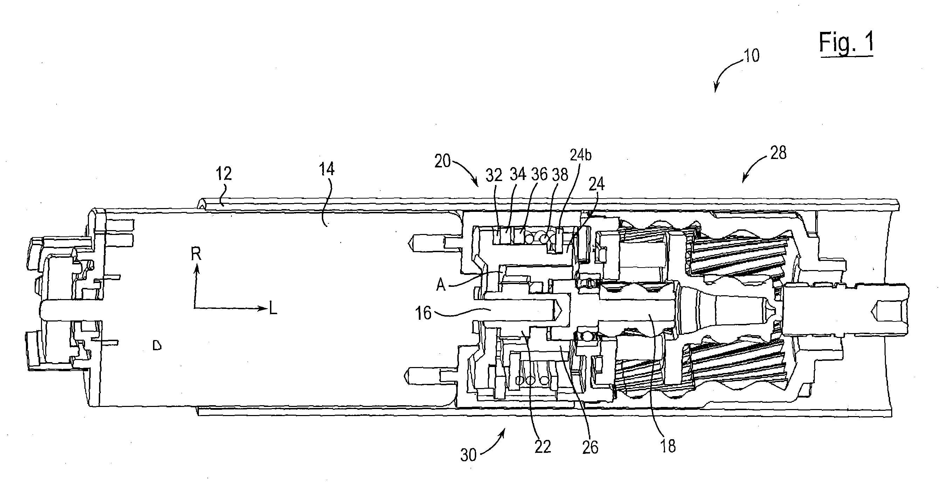

In Figur 1 ist eine Ausführungsform einer erfindungsgemäßen Drehantriebseinrichtung ganz allgemein mit dem Bezugszeichen 10 bezeichnet. Sie umfasst ein zylinderförmiges Gehäuseelement 12 mit einer radialen Richtung R und einer Längsrichtung L, das in seinem Innenraum eine Motorbaugruppe 14, eine von der Motorbaugruppe antreibbare Antriebswelle 16, eine Abtriebswelle 18 sowie eine Übertragungseinrichtung 20 zur Übertragung eines Drehmoments von der Antriebswelle 16 auf die Abtriebswelle 18 aufnimmt. Hierbei handelt es sich bei der Motorbaugruppe 14 um einen bekannten elektrisch betriebenen Rotationsmotor, wobei, falls gewünscht, noch eine Getriebeeinheit zwischen dem Motor 14 und der Antriebswelle 16 vorgesehen werden kann.

Auf die Antriebswelle 16 dreh- und ortsfest aufgesetzt befindet sich ein Antriebs-Übertragungselement 22 sowie von der Antriebswelle 16 aus gesehen radial weiter außen ein ebenfalls dreh- und ortsfest mit dieser verbundenes Stützelement 24, wobei zwischen dem Antriebs-Übertragungselement 22 und dem Stützelement 24 eine taschenförmige Ausnehmung A mit Ausdehnung in Radialrichtung R und Längsrichtung L gebildet ist.

Als Gegenstück zu dem Antriebs-Übertragungselement 22 ist der Abtriebswelle 18 das Abtriebs-Übertragungselement 26 zugeordnet, das in der Ausnehmung A aufgenommen ist und gemeinsam mit der Abtriebswelle 18 rotiert, aber gegenüber dieser in Längsrichtung L um einen vorbestimmten Betrag verlagerbar gehalten ist, wobei der Mechanismus für diese Verlagerung weiter unten erklärt werden wird. Die drehfeste, jedoch in Längsrichtung verlagerbare Aufnehme des Abtriebs-Übertragungselements 26 an der Abtriebswelle 18 kann beispielsweise über wenigstens ein zusammenwirkendes Feder-Nut-Paar erfolgen.

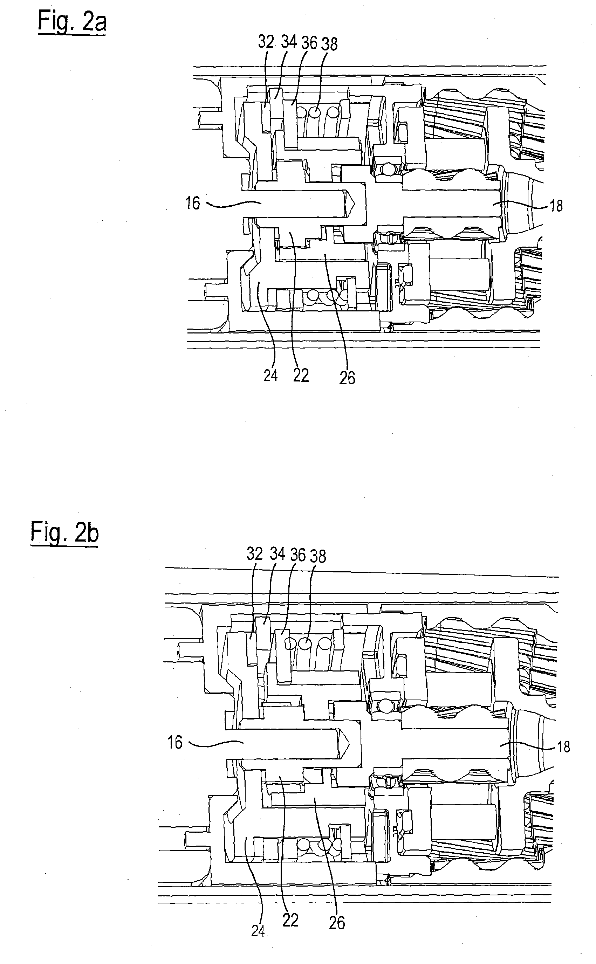

Die Abtriebswelle 18 dient an ihrer der Übertragungseinrichtung 20 abgewandten Seite gleichzeitig als Getriebeeingangswelle für ein Planetengetriebe 28, das in bekannter Weise die Rotation der Abtriebswelle 18 untersetzt und hierdurch eine Getriebeausgangswelle 28b mit gegenüber der Abtriebswelle 18 verringerter Drehzahl und erhöhtem Drehmoment antreibt. Ferner ist der Übertragungseinrichtung 20 die Bremsvorrichtung 30 zugeordnet, für deren Beschreibung auf die Figuren 2a und 2b verwiesen sein soll.

Hierbei zeigt die Figur 2a eine erste Stellung und die Figur 2b eine zweite Stellung der Bremsvorrichtung 30. Die Bremsvorrichtung 30 umfasst zunächst ein der Antriebswelle 16 zugeordnetes und durch diese drehend antreibbares Eingangselement 32, ein drehfest mit dem Gehäuseelement verbundenes Bremselement 34 und ein dem Abtriebs-Übertragungselement 26 zugeordnetes Kupplungselement 36. Das Kupplungselement 36 ist hierbei orts- und drehfest an dem Abtriebs-Übertragungselement 26 gehalten. Des Weiteren umfasst die Bremsvorrichtung 30 eine Spiralfeder 38, die einerseits an dem Kupplungselement 36 und andererseits über einen Vorsprung 24b an dem Stützelement 24 abgestützt ist und das erfindungsgemäße elastische Element bildet.

In der in Figur 2a gezeigten Konfiguration wirkt zwischen der Antriebswelle 16 und der Abtriebswelle 18 nur eine geringe Drehmomentdifferenz und insbesondere zeigt die Figur 2a auch den Ruhezustand der Drehantriebseinrichtung 10. Hierbei wird durch die Wirkung der Spiralfeder 38 das Kupplungselement 36 gegen das Bremselement 34 gedrückt, wodurch einerseits das Bremselement 34 auf seiner dem Kupplungselement 36 abgewandten Seite gegen das Eingangselement 32 drückt, und zum Anderen wird auch das Abtriebs-Übertragungselement 26 durch die Wirkung der Feder 38 gegen das Antriebs-Übertragungselement 22 gedrückt.

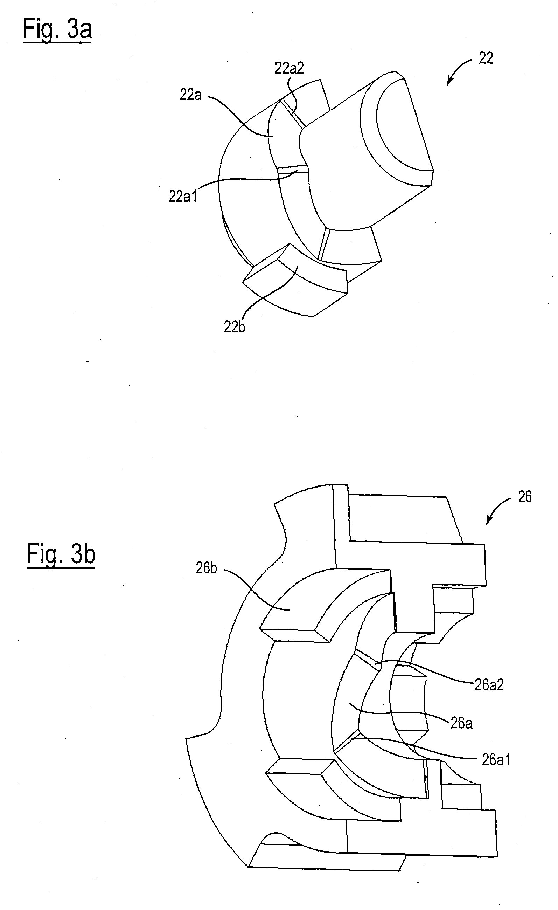

Da das Antriebs-Übertragungselement 22 und das Abtriebs-Übertragungselement 26 mit Schrägflächen versehen sind, die anhand der Figuren 3a und 3b im Folgenden beschrieben werden, findet in der in Figur 2a gezeigten Stellung eine Übertragung von Drehmoment zwischen der Antriebswelle 16 und der Abtriebswelle 18 über die beiden Übertragungselemente 22 und 26 statt. Hierbei wird allerdings durch das Anpressen des Kupplungselements 36 gegen das Bremselement 34 und damit des Bremselements 34 gegen das Eingangselement 32 eine Bremskraft erzeugt, die der Drehung der Eingangswelle 16 entgegenwirkt. Insbesondere wird im Ruhezustand des Motors 14 eine Drehung der Abtriebswelle 18 durch diese Bremskraft verhindert, so dass die Drehantriebseinrichtung 10 durch die Bremsvorrichtung 30 selbsthemmend ist.

Zur Verdeutlichung des Zustands aus Figur 2b, der im Übrigen auch der Darstellung aus Fig. 1 entspricht, sei nun vorgreifend auf die Figuren 3a und 3b verwiesen, in denen jeweils das Antriebs-Übertragungselement 22 bzw. das Abtriebs-Übertragungselement 26 dargestellt sind. Die jeweiligen Ansichten in den Figuren 3a und 3b auf die beiden Übertragungselemente 22 und 26 erfolgt jeweils aus einer Perspektive, die einem schrägen Blick auf den Kontaktbereich zwischen den beiden Übertragungselementen 22 und 26 entspricht.

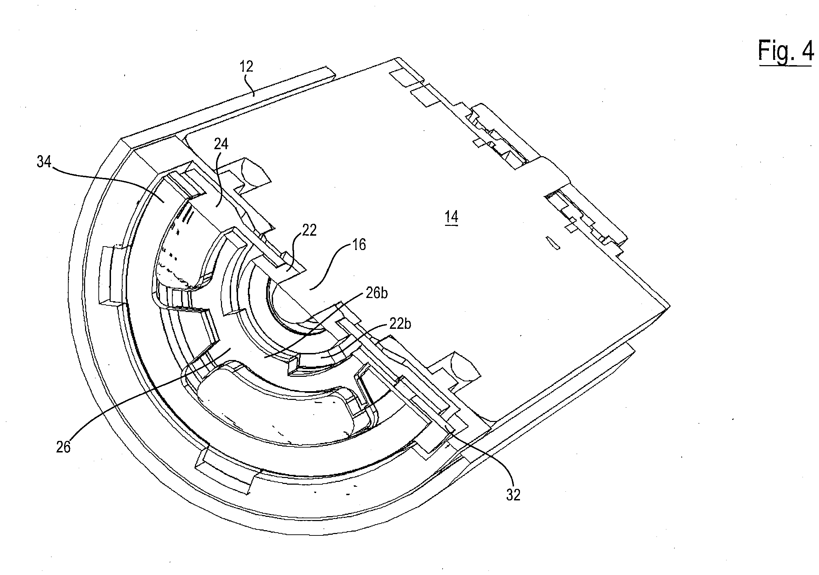

Die beiden Übertragungselemente 22 und 26 sind jeweils mit Schrägflächen 22a und 26a ausgestattet, durch die einerseits ein Drehmoment zwischen den beiden Übertragungselementen 22 und 26 und damit der Antriebswelle 16 und der Abtriebswelle 18 übertragen werden kann, und die andererseits auch eine Verlagerung der beiden Übertragungselemente 22 und 26 gegeneinander in Längsrichtung L hervorrufen können. Des Weiteren sind die Übertragungselemente 22 und 26 mit zusammenwirkenden Anschlägen 22b und 26b bereitgestellt, die einerseits den relativen Rotationswinkel zwischen den beiden Übertragungselementen 22 und 26 begrenzen, wie dies im Folgenden anhand von Figur 4 besprochen werden wird, und die andererseits beim Eintreten dieses maximalen relativen Rotationswinkels die Übertragung des Drehmoments zwischen den beiden Übertragungselementen 22 und 26 übernehmen.

In der in der Figur 2a gezeigten Stellung, in der das Antriebs-Übertragungselement 22 und das Abtriebs-Übertragungselement 26 durch die Wirkung der Spiralfeder 38 aufeinander gedrückt werden, liegt der vorstehende Bereich 22a1 der Schrägfläche 22a des Antriebs-Übertragungselements 22 genau in dem vertieften Bereich 26a2 der Schrägfläche 26a des Abtriebs-Übertragungselements 26 ein, während der vorstehende Bereich 26a1 der Schrägfläche 26a des Abtriebs-Übertragungselements 26 in dem vertieften Bereich 22a2 der Schrägfläche 22a des Antriebs-Übertragungselements 22 einliegt. Da hier wie angesprochen die Drehmomentdifferenz zwischen der Antriebswelle 16 und der Abtriebswelle 18 klein ist, kann das Drehmoment durch die Anpresswirkung der Spiralfeder durch die zusammenwirkenden Schrägflächen 22a und 26a übertragen werden.

Steigt nun allerdings die Drehmomentdifferenz über einen unter anderem durch die Härte der Feder 38 festgelegten ersten Schwellenwert an, so gleiten die zusammenwirkenden Schrägflächen 22a und 26a entgegen der Anpresswirkung der Spiralfeder 38 in Rotationsrichtung gegeneinander ab. Hierdurch findet eine axiale Verlagerung der beiden Übertragungselemente 22 und 26 gegeneinander statt und das Abtriebs-Übertragungselement 26 bewegt sich auf der Abtriebswelle von der Antriebswelle in Längsrichtung L weg, wobei diese Verlagerung von dem oben angesprochenen Feder-Nut-System vermittelt sein kann. Hierbei nimmt das Abtriebs-Übertragungselement 26 das fest mit ihm verbundene Kupplungselement 36 mit, worauf dieses zunächst der Anpressdruck zwischen dem Kupplungselement 36 und dem Bremselement 34 verringert wird, bis schließlich das Kupplungselement 36 aus dem Kontakt mit dem Bremselement 34 heraustritt. Während dieses Vorgangs wird die wirkende Bremskraft der Bremsvorrichtung 30 sukzessive verringert. Der Zustand, in dem das Kupplungselement 36 und das Bremselement 34 nicht mehr in Kontakt sind, ist in Figur 2b gezeigt.

In den Figuren 2a und 2b ist zur besseren Veranschaulichung das Abtriebs-Übertragungselement 26 jeweils in der selben Winkelorientierung dargestellt, während das Antriebs-Übertragungselement 22 gegenüber dem Abtriebs-Übertragungselement 26 soweit verdreht ist, dass die zusammenwirkenden Anschläge 22b und 26b der beiden Übertragungselemente 22 und 26 in Kontakt kommen und die Übertragung des Drehmoments zwischen der Antriebswelle 16 und der Abtriebswelle 18 praktisch vollständig übernehmen. Dieses Anliegen der beiden Anschläge 22b und 26b gegeneinander ist Figur 4 zur Verdeutlichung erneut dargestellt, wobei dort die Drehung der Antriebswelle 16 im Uhrzeigersinn stattfindet, wodurch der Anschlag 22b gegen den Anschlag 26b drückt, so dass das Antriebsmoment der Antriebswelle 16 über das mit dieser fest verbundene Antriebs-Übertragungselement 22 auf das Abtriebs-Übertragungselement 26 und damit die Abtriebswelle 18 übertragen wird.

Sobald beispielsweise am Ende eines Antriebsvorgangs die Drehmomentdifferenz zwischen der Antriebswelle 16 und der Abtriebswelle 18 wieder ausreichend absinkt, sorgt die Wirkung der Spiralfeder 38 dafür, dass die beiden Übertragungselemente 22 und 26 wieder entlang ihrer zusammenwirkenden Schrägflächen 22a und 26a zurück in die in Figur 2a gezeigte Position abgleiten.

## Patentansprüche

1. Drehantriebseinrichtung, umfassend:
- ein Gehäuseelement (12);
- eine in dem Gehäuseelement (12) drehbar gelagerte Antriebswelle (16);
- eine in dem Gehäuseelement (12) drehbar gelagerte Abtriebswelle (18); sowie
- eine Übertragungseinrichtung (20) zur Übertragung eines Drehmoments von der Antriebswelle (16) auf die Abtriebswelle (18);
**dadurch gekennzeichnet, dass** die Übertragungseinrichtung (20) eine Bremsvorrichtung (30) umfasst, welche dazu eingerichtet ist, einer Drehung der Antriebswelle (16) eine Bremskraft entgegenzuwirken, wobei die Bremsvorrichtung (30) umfasst:
- ein der Antriebswelle (16) zugeordnetes und durch diese drehend antreibbares Eingangselement (32);
- ein drehfest mit dem Gehäuseelement (12) verbundenes Bremselement (34); und
- ein bezüglich dem Eingangselement (32) zwischen einer ersten Stellung und einer zweiten Stellung verstellbares Kupplungselement (36),
wobei die durch die Bremsvorrichtung (30) ausgeübte Bremskraft größer ist, wenn sich das Kupplungselement (36) in der ersten Stellung befindet als wenn es sich in der zweiten Stellung befindet;
wobei ferner das Kupplungselement (36) der Abtriebswelle (18) derart zugeordnet ist, dass seine Verstellung von der ersten Stellung zu der zweiten Stellung durch ein Überschreiten eines ersten Schwellenwerts der Drehmomentdifferenz zwischen der Antriebswelle (16) und der Abtriebswelle (18) ausgelöst wird.

2. Drehantriebseinrichtung nach Anspruch 1, **dadurch gekennzeichnet, dass** eine Mehrzahl von zweiten Stellungen für das Kupplungselement (36) vorgesehen sind, in welchen jeweils durch die Bremsvorrichtung (30) eine vorbestimmte Bremskraft ausgeübt wird, und das Kupplungselement (36) dazu eingerichtet ist, bei zunehmender Drehmomentdifferenz zwischen der Antriebswelle (16) und der Abtriebswelle (18) in zweite Stellungen mit abnehmender Bremskraft überzugehen.

3. Drehantriebseinrichtung nach Anspruch 2, **dadurch gekennzeichnet, dass** die Mehrzahl von zweiten Stellungen durch einen kontinuierlichen Bereich mit einem Bremskraftgradienten gebildet sind, wobei das Kupplungselement (36) dazu eingerichtet ist, bei zunehmender Drehmomentdifferenz zwischen der Antriebswelle (16) und der Abtriebswelle (18) den kontinuierlichen Bereich in Richtung abnehmender Bremskraft zu durchlaufen.

4. Drehantriebseinrichtung nach einem der Ansprüche 1 bis 3, **dadurch gekennzeichnet, dass** das Kupplungselement (36) der Abtriebswelle (18) ferner derart zugeordnet ist, dass seine Verstellung von der zweiten Stellung zu der ersten Stellung durch ein Unterschreiten eines zweiten Schwellenwerts der Drehmomentdifferenz zwischen der Antriebswelle (16) und der Abtriebswelle (18) ausgelöst wird.

5. Drehantriebseinrichtung nach einem der vorhergehenden Ansprüche, **dadurch gekennzeichnet, dass** die Übertragungseinrichtung (20) ferner ein mit der Antriebswelle (16) drehfest sowie ortsfest verbundenes Antriebs-Übertragungselement (22) sowie ein mit der Abtriebswelle (18) drehfest verbundenes und entlang der Abtriebswelle (18) verlagerbares Abtriebs-Übertragungselement (26) umfasst, wobei das Kupplungselement (36) drehfest sowie ortsfest mit dem Abtriebs-Übertragungselement (26) verbunden ist.

6. Drehantriebseinrichtung nach Anspruch 5, **dadurch gekennzeichnet, dass** das Antriebs-Übertragungselement (22) und das Abtriebs-Übertragungselement (26) mit wenigstens einem Paar zusammenwirkender Schrägflächen (22a, 26a) bereitgestellt sind, welche dazu eingerichtet sind, eine relative Rotation der beiden Übertragungselemente (22, 26) in eine Verlagerung des Abtriebs-Übertragungselements (26) entlang der Abtriebswelle (18) umzusetzen.

7. Drehantriebseinrichtung nach Anspruch 6, **dadurch gekennzeichnet, dass** die relative Rotation der beiden Übertragungselemente (22, 26) auf einen vorbestimmten Winkel beschränkt ist, beispielsweise mittels wenigstens einem den beiden Übertragungselementen (22, 26) zugeordneten Paar von zusammenwirkenden Anschlägen (22b, 26b).

8. Drehantriebseinrichtung nach einem der Ansprüche 5 bis 7, **dadurch gekennzeichnet, dass** ein elastisches Element (38), wie beispielsweise eine Spiralfeder (38), vorgesehen ist, welche das Abtriebs-Übertragungselement (26) in Richtung des Antriebs-Übertragungselements (22) vorbelastet.

9. Drehantriebseinrichtung nach Anspruch 8, **dadurch gekennzeichnet, dass** das elastische Element (38) einerseits an einem der Antriebswelle (16) zugeordneten Stützelement (24) und andererseits an einem der Abtriebswelle (18) zugeordneten Element, insbesondere dem Kupplungselement (36), abgestützt ist.

10. Drehantriebseinrichtung nach Anspruch 9, **dadurch gekennzeichnet, dass** das Eingangselement (32) der Bremsvorrichtung (30) an dem der Antriebswelle (16) zugeordneten Stützelement (24) getragen ist.

11. Drehantriebseinrichtung nach einem der vorhergehenden Ansprüche. , **dadurch gekennzeichnet, dass** ein die Antriebswelle (16) antreibender Motor (14) und gegebenenfalls ein Getriebe (28), insbesondere ein Planetengetriebe (28), ebenfalls innerhalb des Gehäuseelements (12) angeordnet sind.

12. Längenveränderbare Anordnung, umfassend eine Drehantriebseinrichtung nach einem der vorhergehenden Ansprüche sowie eine Einrichtung zum Übersetzen einer Drehbewegung der Abtriebswelle (28) in eine Längsbewegung.

## Claims

1. Rotary drive device comprising:
- a housing element (12);
- a drive shaft (16) which is rotatably mounted in the housing element (12);
- a driven shaft (18) which is rotatably mounted in the housing element (12); and
- a transmission device (20) for transmitting a torque from the drive shaft (16) to the driven shaft (18);
**characterised in that** the transmission device (20) comprises a braking apparatus (30) which is configured to use a braking force to counteract a rotation of the drive shaft (16), wherein the braking apparatus (30) comprises:
- an input element (32) which is associated with the drive shaft (16) and is rotatably drivable thereby;
- a brake element (34) which is connected to the housing element (12) for conjoint rotation therewith; and
- a coupling element (36) which is adjustable in relation to the input element (32) between a first position and a second position, wherein the braking force exerted by the braking apparatus (30) is greater when the coupling element (36) is in the first position than when it is in the second position;
wherein furthermore the coupling element (36) is associated with the driven shaft (18) such that the displacement of said coupling element from the first position to the second position is initiated by an exceeding of a first threshold value of the torque difference between the drive shaft (16) and the driven shaft (18).

2. Rotary drive device according to claim 1, **characterised in that** a plurality of second positions are provided for the coupling element (36) in each of which a predetermined braking force is exerted by the braking apparatus (30), and the coupling element (36) is configured, with increasing torque difference between the drive shaft (16) and the driven shaft (18), to transfer into second positions having decreasing braking force.

3. Rotary drive device according to claim 2, **characterised in that** the plurality of second positions are formed by a continuous region with a braking force gradient, wherein the coupling element (36) is configured, with increasing torque difference between the drive shaft (16) and the driven shaft (18), to pass through the continuous region in the direction of decreasing braking force.

4. Rotary drive device according to one of the claims 1 to 3, **characterised in that** the coupling element (36) is further associated with the driven shaft (18) such that the displacement of said coupling element from the second position to the first position is initiated by an undershooting of a second threshold value of the torque difference between the drive shaft (16) and the driven shaft (18).

5. Rotary drive device according to one of the preceding claims, **characterised in that** the transmission device (20) further comprises a drive transmission element (22) which is connected to the drive shaft (16) for conjoint rotation and in a stationary manner, and a driven transmission element (26) connected to the driven shaft (18) for conjoint rotation and displaceable along the driven shaft (18), wherein the coupling element (36) is connected to the driven transmission element (26) for conjoint rotation and in a stationary manner.

6. Rotary drive device according to claim 5, **characterised in that** the drive transmission element (22) and the driven transmission element (26) are prepared with at least one pair of cooperating inclined faces (22a, 26a) which are configured to convert a relative rotation of the two transmission elements (22, 26) into an extension of the driven transmission element (26) along the driven shaft (18).

7. Rotary drive device according to claim 6, **characterised in that** the relative rotation of both the transmission elements (22, 26) is restricted to a pre-determined angle, for example by means of at least one pair of cooperating stops (22b, 26b) associated with the two transmission elements (22, 26).

8. Rotary drive device according to one of the claims 5 to 7, **characterised in that** an elastic element (38), for example a helical spring (38) which biases the driven transmission element (26) in the direction toward the drive transmission element (22) is provided.

9. Rotary drive device according to claim 8, **characterised in that** the elastic element (38) is supported on one side on a support element (24) associated with the drive shaft (16) and on the other side on an element associated with the driven shaft (18), in particular the coupling element (36).

10. Rotary drive device according to claim 9, **characterised in that** the input element (32) of the braking apparatus (30) is carried on the support element (24) associated with the drive shaft (16).

11. Rotary drive device according to one of the preceding claims, **characterised in that** a motor (14) driving the drive shaft (16) and possibly a gearing system (28), in particular a planetary gearing system (28), are also arranged within the housing element (12).

12. Variable-length arrangement, comprising a rotary drive device according to one of the preceding claims and a device for converting a rotary movement of the driven shaft (28) into a longitudinal movement.

## Revendications

1. Dispositif d'entraînement rotatif comprenant :
- un élément de boîtier (12) ;
- un arbre d'entrée (16) supporté de manière rotative dans l'élément de boîtier (12) ;
- un arbre de sortie (18) supporté de manière rotative dans l'élément de boîtier (12) ; et
- un dispositif de transmission (20) pour transmettre un couple de l'arbre d'entrée (16) à l'arbre de sortie (18) ;
**caractérisé en ce que** le dispositif de transmission (20) comprend un dispositif de freinage (30) qui est adapté pour contrecarrer une rotation de l'arbre d'entrée (16) avec une force de freinage, dans lequel le dispositif de freinage (30) comprend:
- un élément d'entrée (32) associé à l'arbre d'entraînement (16) et pouvant être entraîné en rotation par celui-ci ;
- un élément de freinage (34) relié de manière fixe en rotation à l'élément de boîtier (12) ; et
- un élément d'accouplement (36) réglable entre une première position et une deuxième position par rapport à l'élément d'entrée (32), la force de freinage exercée par le dispositif de freinage (30) étant plus grande lorsque l'élément d'accouplement (36) se trouve dans la première position que lorsqu'il se trouve dans la deuxième position ;
dans lequel en outre l'élément d'accouplement (36) est associé à l'arbre de sortie (18) de telle sorte que son déplacement de la première position à la deuxième position est déclenché par le dépassement d'une première valeur de seuil de la différence de couple entre l'arbre d'entrée (16) et l'arbre de sortie (18).

2. Dispositif d'entraînement rotatif selon la revendication 1, **caractérisé en ce qu'**une pluralité de secondes positions sont prévues pour l'élément d'accouplement (36), dans chacune desquelles une force de freinage prédéterminée est exercée par le dispositif de freinage (30), et l'élément d'accouplement (36) est adapté pour se déplacer dans des secondes positions avec une force de freinage décroissante lorsque la différence de couple entre l'arbre d'entrée (16) et l'arbre de sortie (18) augmente.

3. Dispositif d'entraînement rotatif selon la revendication 2, **caractérisé en ce que** la pluralité de secondes positions sont formées par une plage continue ayant un gradient de force de freinage, dans lequel l'élément d'accouplement (36) est adapté pour passer à travers la plage continue dans le sens d'une force de freinage décroissante lorsque la différence de couple entre l'arbre d'entrée (16) et l'arbre de sortie (18) augmente.

4. Dispositif d'entraînement rotatif selon l'une quelconque des revendications 1 à 3, **caractérisé en ce que** l'élément d'accouplement (36) est en outre associé à l'arbre de sortie (18) de telle manière que son déplacement de la deuxième position à la première position est déclenché par la différence de couple entre l'arbre d'entrée (16) et l'arbre de sortie (18) tombant en dessous d'une deuxième valeur de seuil.

5. Dispositif d'entraînement rotatif selon l'une des revendications précédentes, **caractérisé en ce que** le dispositif de transmission (20) comprend en outre un élément de transmission d'entrée (22) relié à l'arbre d'entrée (16) de manière fixe en rotation et stationnaire et un élément de transmission de sortie (26) relié à l'arbre de sortie (18) de manière fixe en rotation et stationnaire et déplaçable le long de l'arbre de sortie (18), l'élément d'accouplement (36) étant relié à l'élément de transmission de sortie (26) de manière fixe en rotation et stationnaire.

6. Dispositif d'entraînement rotatif selon la revendication 5, **caractérisé en ce que** l'élément de transmission d'entrée (22) et l'élément de transmission de sortie (26) sont munis d'au moins une paire de surfaces biseautées coopérantes (22a, 26a) qui sont adaptées pour convertir une rotation relative des deux éléments de transmission (22, 26) en un déplacement de l'élément de transmission de sortie (26) le long de l'arbre de sortie (18).

7. Dispositif d'entraînement rotatif selon la revendication 6, **caractérisé en ce que** la rotation relative des deux éléments de transmission (22, 26) est limitée à un angle prédéterminé, par exemple au moyen d'au moins une paire de butées coopérantes (22b, 26b) associées aux deux éléments de transmission (22, 26).

8. Dispositif d'entraînement rotatif selon l'une quelconque des revendications 5 à 7, **caractérisé en ce qu'**il est prévu un élément élastique (38), tel qu'un ressort hélicoïdal (38), qui sollicite l'élément de transmission de sortie (26) vers l'élément de transmission d'entrée (22).

9. Dispositif d'entraînement rotatif selon la revendication 8, **caractérisé en ce que** l'élément élastique (38) s'appuie d'une part sur un élément de support (24) associé à l'arbre d'entrée (16) et d'autre part sur un élément associé à l'arbre de sortie (18), en particulier l'élément d'accouplement (36).

10. Dispositif d'entraînement rotatif selon la revendication 9, **caractérisé en ce que** l'élément d'entrée (32) du dispositif de freinage (30) est supporté à l'élément de support (24) associé à l'arbre d'entraînement (16).

11. Dispositif d'entraînement rotatif selon l'une des revendications précédentes. **caractérisé en ce qu'**un moteur (14) entraînant l'arbre d'entraînement (16) et, le cas échéant, un engrenage (28), en particulier un engrenage planétaire (28), sont également disposés à l'intérieur de l'élément de boîtier (12).

12. Arrangement à longueur variable, comprenant un dispositif d'entraînement en rotation selon l'une des revendications précédentes et un dispositif pour convertir un mouvement de rotation de l'arbre de sortie (28) en un mouvement longitudinal.
